(19) Europäisches Patentamt
European Patent Office
Office européen des brevets

(11) **EP 4 653 393 A1**

(12) **EUROPEAN PATENT APPLICATION**

(43) Date of publication:
**26.11.2025 Bulletin 2025/48**

(21) Application number: **24178076.6**

(22) Date of filing: **24.05.2024**

(51) International Patent Classification (IPC):
**C01F 11/02** *(2006.01)*      **C01F 11/06** *(2006.01)*
**C25B 1/20** *(2006.01)*

(52) Cooperative Patent Classification (CPC):
**C01F 11/06; C01F 11/02; C25B 1/04; C25B 1/20;**
**C25B 9/19;** C01P 2004/51; C01P 2004/52;
C01P 2004/61; C01P 2006/12; C01P 2006/14;
C01P 2006/80

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Carmeuse Technologies SA**
**1348 Louvain-la-Neuve (BE)**

(72) Inventor: **CHARDON, Aurélien**
**B-4500 Huy (BE)**

(74) Representative: **AWA Benelux**
**Parc d'affaires Zénobe Gramme - Bât. K**
**Square des Conduites d'Eau 1-2**
**4020 Liège (BE)**

(54) **HIGH-PURITY CALCIUM HYDROXIDE**

(57)     Calcium hydroxide particulates having a $d_{50}$ comprised in the range from 10 to 40 microns, preferably in the range from 15 to 25 microns and a specific surface BET lower than 0.75 $m^2$/g, preferably lower than 0.6 $m^2$/g.

Fig. 2

EP 4 653 393 A1

**Description**

**Technical Field**

The present invention relates to calcium hydroxide particles, a milk of lime thereof, shaped bodies thereof, at least one use thereof and a process for forming at least two calcium-based compositions.

**Background Art**

Calcium hydroxide is known for its efficient treatment of flue gases containing acid pollutants. Calcium hydroxide is also used in other applications such as water treatment, Direct Air Capture, soil treatment, and the food industry.

In particular, for the food industry, calcium hydroxide compositions with a high grade of purity are sought. However, manufacturing such products is challenging as it requires several purification steps.

Furthermore, US2022064063 proposes an electrolysis reactor adapted to transform calcium carbonate into calcium hydroxide, principally for construction purposes. However, this disclosure aims at the preparation of high-grade calcium hydroxide from synthetic calcium carbonate, the production of which is relatively complex, rendering the entire calcium hydroxide production uneconomical.

**Aims of the Invention**

The invention is aimed at providing a solution to overcome at least one drawback of the teaching provided by the prior art.

More specifically, the invention is aimed at providing a product with a high level of purity, as well as improving the efficiency of the process to obtain said product.

**Summary of the Invention**

For the above purpose, the invention is directed to calcium hydroxide particles having:

- optionally a $d_{50}$ comprised in the range from 10 to 40 microns, preferably in the range from 15 to 25 microns
- optionally a $d_{99}$ lower than 120 microns, preferably lower than 75 microns ; and
- optionally a specific surface BET lower than 0.75 $m^2/g$, preferably lower than 0.6 $m^2/g$

According to specific embodiments of the invention, the calcium hydroxide particles comprise one or more of the following technical features:

- an Al (Aluminum) content lower than 150 ppm relative to the weight of the particles, preferably lower than 100 ppm relative to the weight of the particles but higher than or equal to 50 ppm relative to the weight of the particles, in particular higher than 80 ppm relative to the weight of the particles;

- an Al (Aluminum) content lower than 50 ppm relative to the weight of the particles;

- a Fe (Iron) content lower than 2000 pm relative to the weight of the particles, preferably lower than 1000 ppm relative to the weight of the particles, more preferably lower than 200 relative to the weight of the particles, in particular lower than 150 ppm relative to the weight of the particles but higher than or equal to 50 ppm relative to the weight of the particles, in particular higher than 80 ppm relative to the weight of the particles;

- a Fe (Iron) content lower than 50 ppm relative to the weight of the particles;

- a Mn (Manganese) content lower than 1500 pm relative to the weight of the particles, preferably lower than 1000 ppm relative to the weight of the particles, more preferably lower than 200 relative to the weight of the particles, in particular lower than 150 ppm relative to the weight of the particles but higher than or equal to 50 ppm relative to the weight of the particles, in particular higher than 80 ppm relative to the weight of the particles;

- a Mn (Manganese) content lower than 50 ppm relative to the weight of the particles;.

- a Si (Silicon) content lower than 200 ppm relative to the weight of the particles, preferably lower than 150 ppm relative to the weight of the particles but higher than or equal to 100 ppm relative to the weight of the particles, in particular higher than 105 ppm relative to the weight of the particles

- a Si (Silicon) content lower than 100 ppm relative to the weight of the particles;

- a S (Sulfur) content not higher than 2000 ppm relative to the weight of the particles;

- a C (Carbon) content not higher than 0.7 % relative to the weight of the particles;

- a BJH pore volume for the range of pores having a diameter of between 20-1000 Å not higher than 0.002 cm$^3$/g as calculated according to the method described in standard DIN 66134 (February 1998 version);

- the particulate size distribution of the particles has a monomodal shape;

- a $d_{10}$ higher than 1 micron;

- a reactivity with a $t_{90}$ higher than 20 seconds, preferably higher than 30 seconds, as calculated according to the method described in standard NBN T03.358;

- having a weight fraction of $Ca(OH)_2$ of at least 80%, preferably at least 90% on a dry basis.

The invention is also directed to a milk of lime comprising the calcium hydroxide particles.

The invention is also directed to shaped bodies, selected from the group comprising pellets, granules, extrudates, 3D printings or compacts such as tablets or briquettes comprising the calcium hydroxide particles.

The invention is also directed to a use of at least one of the calcium hydroxide particles, the milk of lime and the shaped bodies as an additive to modify texture, to improve nutritional properties, to preserve and/or to facilitate the processing of food.

The invention is also directed to a use of at least one of the calcium hydroxide particles, the milk of lime and the shaped bodies as an additive or a calcium silicate precursor to a cement composition.

The invention is also directed to a use of at least one of the calcium hydroxide particles, the milk of lime and the shaped bodies as a sorbent for $CO_2$ capture in air, in particular for Direct Air Capture application.

The invention is also directed to a use of at least one of the calcium hydroxide particles, the milk of lime and the shaped bodies as a sorbent for purifying flue gas.

The invention is also directed to a process for forming at least two calcium-based compositions, in particular one of the at least two calcium-based compositions being the calcium hydroxide composition, said process comprising the steps of:

- separating calcium carbonate particles according to size, thereby forming a first group of calcium carbonate particles and a second group of calcium carbonate particles, wherein the calcium carbonate particles of the first group are on average larger than the calcium carbonate particles of the second group;

- heating the calcium carbonate particles of the first group in a reactor of a first circuit up to a temperature range in which carbon dioxide of said calcium carbonate particles is released to obtain decarbonated particles comprising CaO and/or MgO;

- conveying the calcium carbonate particles of the first group by a first entraining gas in the first circuit for preheating said carbonated particles, said entraining gas comprising said carbon dioxide, preferably said gas composition being substantially free of nitrogen;

- separating, preferably inertially separating, the carbonated particles of the first group from a first entraining gas flow, preferably before being fed to the reactor;

- preferably transferring the decarbonated particles to a cooling section of a second circuit comprising a second entraining gas in which the conveyed decarbonated particles release a portion of their thermal energy, preferably said second entraining gas is substantially free of carbon dioxide;

- preferably inertially separating the decarbonated particles from a second entraining gas flow, thereby forming another of the at least two calcium-based compositions;

- contacting the calcium carbonate particles of the second group with water of a first aqueous solution contained in a first receptacle in which an anode is provided;

- circulating current between the anode and a cathode provided in a second receptacle containing a second aqueous solution, said first and second receptacles being separated by at least one separating membrane, thereby forming the one of the at least two calcium-based compositions, as a precipitate, in the second receptacle;

- optionally collecting a first gas stream generated in the first receptacle;

- optionally collecting a second gas stream generated in the second receptacle.

According to specific embodiments of the invention, the process comprises one or more of the following technical features:

• supplying the first gas stream as a comburent of a combustion generating at least a portion of the heat used to the heart the particles of carbonated materials of the first group in the reactor;

• supplying the second gas stream as a fuel of a combustion generating at least a portion of the heat used to heat the particles of carbonated materials of the first group in the reactor;

• hydrating the decarbonated particles of the first group in contact with water as liquid and/or steam, and optionally in the presence of a dilution gas, such as air or a dioxygen-enriched composition, in particular pure dioxygen, in the hydration section, preferably arranged in the second circuit, to obtain hydrated particles comprising $Ca(OH)_2$, thereby forming a further of the at least two calcium-based compositions, optionally transferring at least a portion of the heat generated by the hydration of the decarbonated particles of the first group to the second gas;

• the at least one separating membrane comprises a membrane with one side in contact with the first aqueous solution and a second side in contact with the second aqueous solution;

• the at least one membrane or the membrane comprises a cationic membrane, allowing the transfer of cations while blocking or minimizing the transfer of solid particles and anions;

• at least one of the first and the second solution comprising a Ca-cation-based electrolyte, in particular $Ca(ClO_4)_2$;

• the particles of the first group have a $d_{90}$ less than 10 mm, preferably less than 6 mm, more preferably less than 4 mm but a $d_{10}$ higher than or equal to 1 mm and the particles of the second group have a $d_{90}$ lower than or equal to 1 mm.

## Brief Description of Drawings

Aspects of the invention will now be described in more details with reference to the appended drawings, wherein same reference numerals illustrate same features.

Figure 1 shows an apparatus adapted to produce calcium hydroxide particles according to the invention.

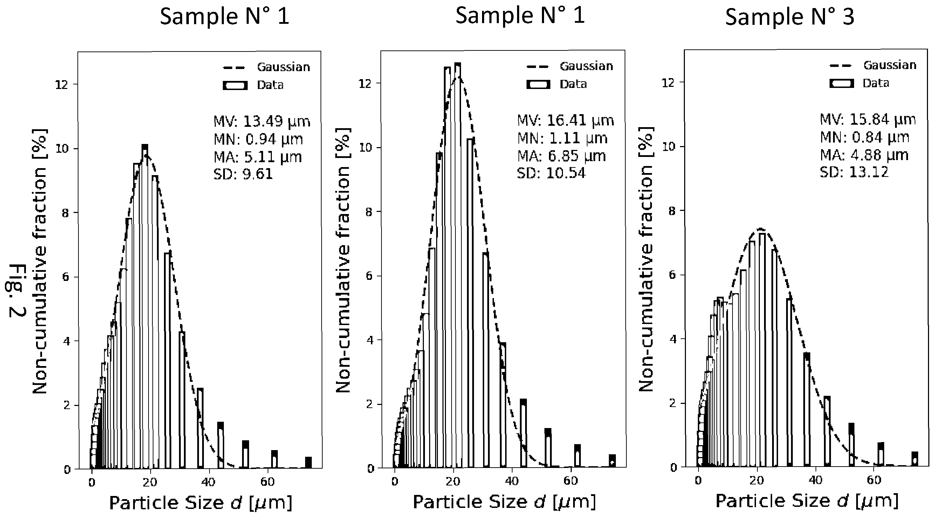

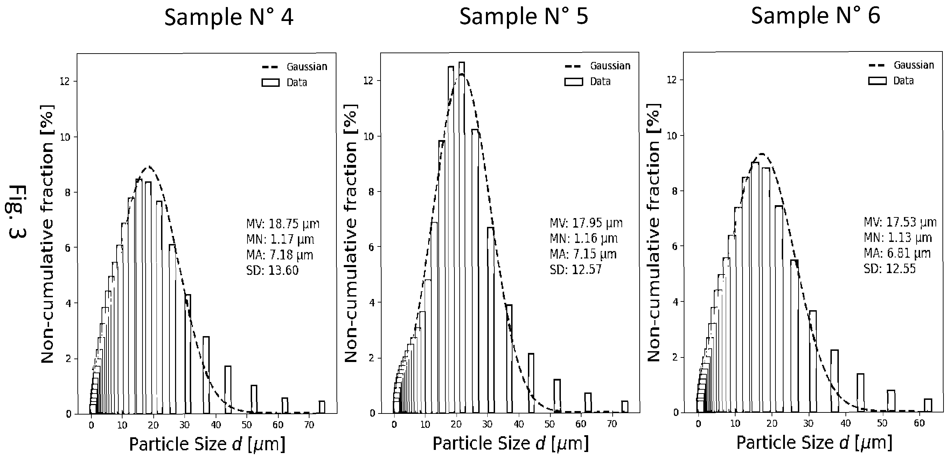

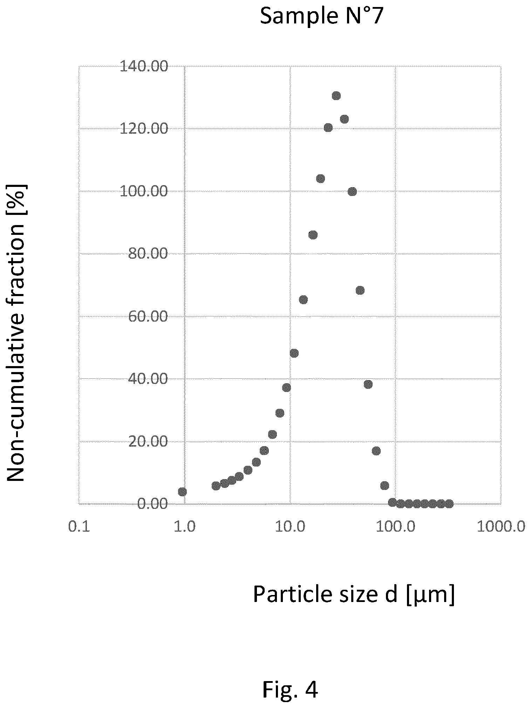

Figures 2, 3 and 4 show a particle size distribution of calcium hydroxide particles according to the invention.

Figures 5a and 5b show an SEM image and an XRD pattern of calcium hydroxide particles according to the invention, respectively.

Figure 6 shows a system for producing quicklime and calcium hydroxide particles according to the invention.

Figure 7 shows a system for producing two calcium-based compositions according to the invention.

## Detailed description

The present invention will now be described in detail with reference to the accompanying drawings and their reference numbers, in which illustrative and non-limitative embodiments of the invention are shown.

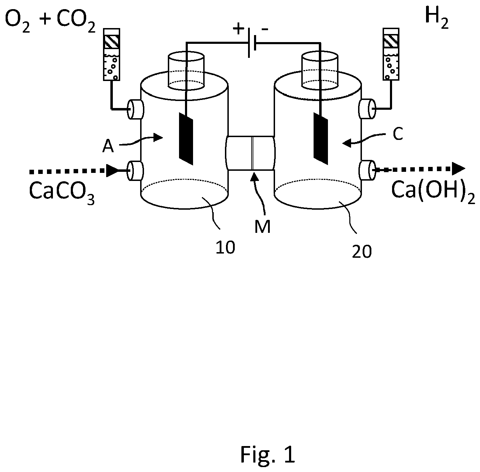

Figure 1 illustrates an apparatus that produces the product according to the invention. This apparatus comprises two receptacles, each filled with a solution. In the first receptacle 10, an anode A is provided. In the second receptacle 20, a cathode C is provided. A separator M, in particular a cationic membrane, is interposed between the first receptacle 10 and the second receptacle 20, allowing the transfer of cations while limiting the transfer of solid particles and anions. In use, the two receptacles 10 and 20 are filled with deionized water and an electrolyte, preferably with a calcium-based cation, in particular $Ca(ClO_4)_2$. Calcium carbonate ($CaCO_3$) can be introduced in solid form. In this case, calcium carbonate is hardly soluble in a solution with a pH around 7. Alternatively, the calcium carbonate can be pre-dissolved in an acid and then poured into the first receptacle 10. A power source is electrically connected to the anode A and the cathode C, causing the circulation of electrons between the cathode C and the anode A. At the cathode, a supply of electrons induces the reduction of water molecules into hydroxide anions ($OH^-$) and dihydrogen ($H_2$) in gaseous form. At the anode, an extraction of electrons induces the oxidation of water molecules into protons ($H^+$) and dioxygen ($O_2$) in gaseous form.

In Tables 1 and 2, the characteristics of five different configurations of electrolytes and electrodes were tested within an electrolyzer comprising two receptacles, as depicted in Figure 1.

TABLE 1

| Configuration | Electrolyte Anode | Anode Electrode | Faradic efficiency at Anode (%) | Transport number of $Ca^{2+}$ (%) |
|---|---|---|---|---|
| 1 | $NaNO_3$ | DSA | 93% | 68% |
| 2 | $NaClO_4$ | DSA | 92% | 68% |
| 3 | $NaClO_4$ | Stainless steel | 104% | 68% |
| 4 | $Ca(ClO_4)$ | DSA | 104% | 99% |
| 5 | $Ca(ClO_4)$ | DSA | 104% | 99% |

TABLE 2

| Configuration | Electrolyte Cathode | Cathode Electrode | Faradic efficiency at Cathode (%) | Transport number of $Ca^{2+}$ (%) |
|---|---|---|---|---|
| 1 | $NaNO_3$ | Ni | 0% | 68% |
| 2 | $NaClO_4$ | Ni | 101% | 68% |
| 3 | $NaClO_4$ | Ni | 102% | 68% |
| 4 | $Ca(ClO_4)$ | Ni | 102% | 99% |
| 5 | $NaClO_4$ | Ni | 102% | 68% |

For configurations N°1 to 5 a cationic membrane Nafion N115 from AFGA was used. The Dimensionally Stable Anode (DSA) has a $IrO_2$ coating over titanium with the following features: Size : $6.5 \times 2.5 \times 0.2$ [cm] and 12 [g/m$^2$] of $IrO_2$ from Metakem. The Ni cathode has the following features: Size : $6.5 \times 2.5 \times 0.2$ [cm] and a purity $\geq 99.5\%$ from Alfa Aesar.

The composition of the electrolyte influences the efficacy of electrolysis. Traditionally, sodium cations ($Na^+$) from compounds such as $NaNO_3$ or $Na(ClO_4)$ are used for both the anode and cathode receptacles (10 and 20). However, it has been found that sodium ions compete with calcium ions in conducting the current, as shown in Table 1, thereby reducing the migration efficacy. This limitation can be effectively addressed by using a calcium-based electrolyte (Configuration No. 4) instead of a sodium-based electrolyte. Consequently, a calcium-based electrolyte enhances the efficiency of the ion migration. In this context, calcium perchlorate ($Ca(ClO_4)_2$) can be chosen for this purpose.

An advantage of a calcium-based electrolyte is that it can be automatically regenerated through the progressive dissolution of calcium carbonate. It should be noted that Configuration No. 5 differs from Configuration No. 4 in that the electrolyte for the second receptacle 20 is $NaClO_4$. For the production of calcium, three sources of calcium carbonates were tested as illustrated in Table 3.

TABLE 2

| $CaCO_3$ source | Al [ppm] | Ba [ppm] | Fe [ppm] | K [ppm] | Mg [ppm] | Mn [ppm] | Na [ppm] | Ni [ppm] | P [ppm] | Si [ppm] | Sr [ppm] | Ti [ppm] |
|---|---|---|---|---|---|---|---|---|---|---|---|---|
| N°1 | <50 | <50 | <50 | <50 | <50 | <50 | <50 | <50 | <100 | <100 | 75 | <50 |
| N°2 | 477 | <50 | 381 | 110 | 1269 | 116 | 141 | <50 | 303 | 1713 | 498 | <50 |

(continued)

| CaCO₃ source | Al [ppm] | Ba [ppm] | Fe [ppm] | K [ppm] | Mg [ppm] | Mn [ppm] | Na [ppm] | Ni [ppm] | P [ppm] | Si [ppm] | Sr [ppm] | Ti [ppm] |
|---|---|---|---|---|---|---|---|---|---|---|---|---|
| N°3 | 4278 | 112 | 10286 | <50 | 3838 | 919 | 746 | <50 | 590 | 6748 | 888 | 309 |

The CaCO₃ source No. 1 is from BioXtra (Sigma-Aldrich) and consists of particles with a diameter of less than 1000 $\mu$m and a purity above 99.0%. The CaCO₃ source No. 2 is chalk powder with a $d_{99}$ of 100 microns. The CaCO₃ source No. 3 is in the form of calcium- carbonate pellets used for water treatment. The CaCO₃ sources No. 2 and 3 contain a significant number of impurities and are representative of natural limestone supplied (e.g. extracted from a mine).

For the preparation of samples No. 1 to 6, each of the CaCO₃ sources was reacted with $HClO_4$ to form the electrolyte $Ca(ClO_4)_2$. This process also leads to the dissolution of the calcium carbonate as well as most impurities before the resulting suspension is transferred to the anode compartment 10 to start $Ca(OH)_2$ generation. Alternatively, one of the CaCO₃ sources can be directly supplied to the anode compartment 10 filled with the selected electrolyte, particularly $Ca(ClO_4)_2$. Both methods lead to similar results, with some nuances. For instance, pre-dissolving one of the CaCO₃ sources can induce the undesirable dissolution of some impurities, such as iron oxide. Conversely, if the CaCO₃ source is directly introduced into the anode compartment 10, the dissolution of most impurities is prevented because the excess CaCO₃ in solid form maintains the pH level to around 6, preventing a drop in pH in the first receptacle 10 and precluding the dissolution of most impurities.

The composition of the precipitate calcium hydroxide produced in the electrolyzer with the configuration N°5 is illustrated in Table 3 and 4. For these tests, a current of 1.5 A was applied.

TABLE 3

| | | Ca(OH)$_2$ precipitate at the bottom of the cathode receptacle (20) | | | | | | | | | | | |
| Sam ple | CaCO$_3$ source | Al [ppm ] | Ba [ppm] | Fe [ppm] | K [ppm ] | Mg [ppm] | Mn [ppm ] | Na [ppm] | Ni [ppm ] | P [ppm] | Si [ppm] | Sr [ppm] | Ti [ppm] |
|---|---|---|---|---|---|---|---|---|---|---|---|---|---|
| 1 | N°1 | <50 | <50 | <50 | <50 | <50 | <50 | 207 | <50 | <100 | <100 | <50 | <50 |
| 2 | N°2 | 109 | <50 | 422 | <50 | 1580 | 124 | 141 | 55 | <100 | <100 | <50 | <50 |
| 3 | N°3 | 83 | <50 | 1943 | <50 | 5142 | 1137 | 282 | 264 | <100 | 121 | <50 | <50 |

TABLE 4

| | Ca(OH)$_2$ precipitate on the cathode surface | | | | | | | | | | | | |
|---|---|---|---|---|---|---|---|---|---|---|---|---|---|
| Sam ple | CaCO$_3$ source | Al [ppm] | Ba [ppm ] | Fe [ppm ] | K [ppm ] | Mg [ppm] | Mn [ppm ] | Na [ppm] | Ni [ppm ] | P [ppm] | Si [ppm ] | Sr [ppm] | Ti [ppm] |
| 4 | N°1 | <50 | <50 | 62 | <50 | <50 | <50 | 7342 | <50 | <100 | <100 | <50 | <50 |
| 5 | N°2 | <50 | <50 | 128 | <50 | 93 | <50 | 11198 | 214 | <100 | <100 | <50 | <50 |
| 6 | N°3 | <50 | <50 | 54 | <50 | 127 | <50 | 3025 | 473 | <100 | <100 | <50 | <50 |

The results illustrated in Tables 3 and 4 show calcium hydroxide with extremely low levels of impurities, the composition of which varies depending on its precipitation location: at the bottom of the cathode compartment (a.k.a. second receptacle) 20 or on the cathode surface. During the pre-dissolution, some impurities, such as iron oxide, in addition to the calcium carbonate, are dissolved in the solution of the first receptacle (anode). Once the current circulates, cations from some impurities (such as $Fe^{3+}$) migrate, along with the $Ca^{2+}$ cations, from the anode compartment (a.k.a. first receptacle) 10 to the cathode compartment 20. Generally, cations from some impurities lead to the formation of undesirable hydroxides (e.g., $Fe(OH)_3$). Certain impurities, such as $Fe(OH)_3$, which are less soluble than calcium hydroxide ($Ca(OH)_2$), directly precipitate in the presence of $OH^-$ ions. For this reason, these undesirable hydroxides precipitate as soon as they pass the separator (M) and enter the second receptacle 20, where they come into contact with hydroxide anions. It has been observed that the precipitate formed at the bottom of the cathode compartment 20 contains a non-negligible fraction of Fe-based impurities. It should be noted that Mn-based impurities appear to behave in a comparable manner. The $Ca(OH)_2$ precipitate formed on the cathode electrode is substantially free of iron and manganese. The results also show that impurities such as aluminum oxide or silicon oxide do not dissolve during the pre-dissolution, as the precipitate contains only a small amount of Al- or Si-based impurities.

Table 4 shows the presence of Sodium in the precipitate formed on the surface of the cathode. It is expected that sodium hydroxide remains in the liquid phase on the product coating the cathode and, therefore, after drying for analysis, it ends up in the product.

If the calcium carbonate source is directly supplied as a solid in the anode compartment 10, most impurities-except for those based on K, Na, and Mg-will not dissolve initially, as the pH of the solution remains around 6 at the bottom of the receptacle 10. Indeed the region at the bottom is sufficiently away from the anode electrode where the pH is lower due to a pH gradient generated by the current. This prevents the migration of certain undesirable cations (e.g., Fe, Mn), implying the absence of at least iron-based impurities in the cathode compartment.

Although the pre-dissolution of $CaCO_3$ has the drawback of dissolving undesirable impurities, this approach has the merit of combining the steps of forming the electrolyte and dissolving the $CaCO_3$ source. A compromise between the two options is to combine them by adding some of the $CaCO_3$ source to the anode compartment after the pre-dissolution. The presence of excess $CaCO_3$ in the first receptacle 10 would raise the pH, thereby causing the precipitation of iron impurities in the anode compartment.

A test was performed for Configuration No. 4 with $CaCO_3$ source No. 1, wherein no pre-dissolution was conducted. T

TABLE 5

| Ca(OH)₂ precipitate at the bottom | | | | | | | |
|---|---|---|---|---|---|---|---|
| Sample | CaCO₃ source | S[ppm] | C[g/100g] | Al [ppm] | Fe [ppm] | Mg [ g/100g] | Si [ppm] | Mn [ppm] |
| 7 | N°1 | 0.002% | 0.657 | 22 | 48 | 0.24 | 85 | 2 |

The result in Table 5 shows that the measures of the invention allows the production a substantially pure calcium hydroxide.

In view of these results, it can be concluded that the impurities contained in the $CaCO_3$ source can be classified into two families: insoluble and soluble impurities. The insoluble impurities do not interact with the acidic anodic environment of the electrolyzer and remain in solid form. These residual solids must therefore be removed gradually to avoid their deposition and accumulation. In natural limestone, common insolubles are iron, aluminum, manganese, titanium, and silicon oxides ($Al_2O_3$, $Mn_3O_4$, $TiO_2$, $SiO_2$). Conversely, soluble impurities interact with the anodic environment and are dissolved together with $CaCO_3$. Among these, the most common and problematic soluble impurity is magnesium (MgO and $MgCO_3$). Indeed, magnesium has a higher solubility than $CaCO_3$ and thus tends to dissolve before $CaCO_3$. Additionally, magnesium hydroxide ($Mg(OH)_2$) is less soluble than calcium hydroxide ($Ca(OH)_2$). This implies that it will form before calcium hydroxide. Therefore, magnesium competes with calcium, and a too high concentration of magnesium will induce a drastic change in the operation of the electrolyzer. For example, if the electrolyzer were to be fed with dolomite ($CaMg(CO_3)_2$), it would initially process only the magnesium, dissolving $MgCO_3$ and producing $Mg(OH)_2$. The electrolyzer would only process calcium once the magnesium is completely consumed. Furthermore, other soluble impurities such as potassium and phosphorus ($K_2CO_3$, KOH and $P_2O_5$) are also present but in small quantities. Surprisingly, the impurity content in the $Ca(OH)_2$ precipitate is very low, comparatively to the impurity content in the $CaCO_3$ source. Finally, it has also been shown that iron impurity such as $Fe_2O_3$ has a particular behavior as it can also be dissolved in the anode compartment in case the pH drops below around 6.

Table 6 shows that the calcium hydroxide compositions exhibit similar shapes, having a monomodal distribution except for sample 3. Sample 3 is expected to be contaminated with iron impurities, causing an additional peak.

TABLE 6

| Sample | Surfac e BET (m²/g) | Vp (m³/g) | $t_{90}$ | $d_{10}$ (μm) | $d_{50}$ (μm) | $d_{90}$ (μm) | $d_{99}$ (μm) | $d_{100}$ (μm) | Modality |
|---|---|---|---|---|---|---|---|---|---|
| 1 | | | | 2.0 | 11.9 | 26.2 | 51.6 | 88 | 1 peak |
| 2 | | | | 2.8 | 15.7 | 29.6 | 54.0 | 88 | 1 peak |
| 3 | | | | 1.9 | 11.5 | 34.8 | 65.6 | 88 | 2 peaks |
| 4 | | | | 3.1 | 15.3 | 38.2 | 74.4 | 124.5 | 1 peak |
| 5 | | | | 3.1 | 15.2 | 35.5 | 68.6 | 124.5 | 1 peak |
| 6 | | | | 2.9 | 14.8 | 35.1 | 66.0 | 104.7 | 1 peak |
| 7 | 0.581 | 0,00155 | 46 | 6.8 | 22.9 | 44.62 | 66.9 | 111.0 | 1 peak |

The particle size distribution shows particles with a maximal diameter $d_{99}$ that does not exceed 75 microns and with a $d_{50}$ in the range from 10 to 25 microns. The sample 7 shows a reactivity of 46 seconds, indicating a low dissolubility value. Likewise, the specific surface BET value and the porous volume BJH is particularly low, because of the nature of the formation of these particles.

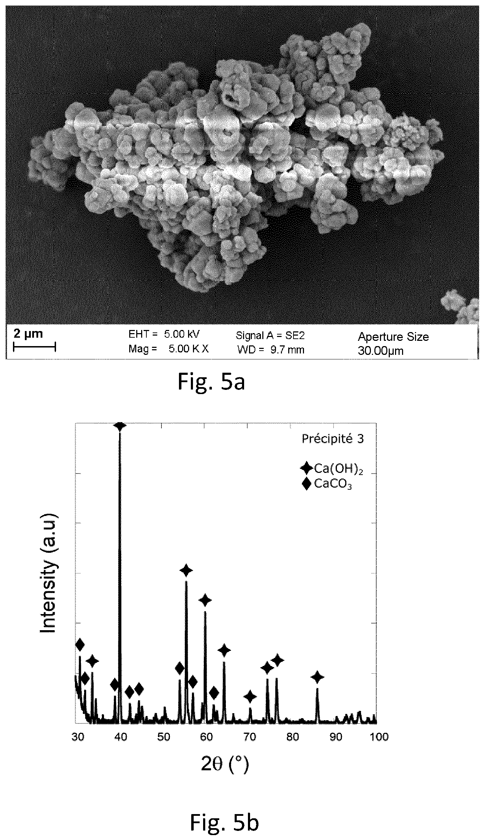

Precipitate aggregates obtained with an electrolyzer of Figure 1 with the configuration N°4 are illustrated in Figure 5a. They exhibit a different morphology from the characteristic hexagonal prism morphology of $Ca(OH)_2$ obtained in US2022064063. Unlike the latter, the compartments 10 and 20 are magnetically stirred, which could hinder crystallization and cause the formation of clustered aggregates.

Figure 5b illustrates a Scan DRX of a Calcium hydroxide precipitate obtained with an electrolyzer of Figure 1 with the configuration N°4. Peaks corresponding to calcium hydroxide and calcium carbonate are shown. However, the intensity is much higher for $Ca(OH)_2$, and it can thus be affirmed that this process indeed produces the desired compound. The traces of carbonates found could be due to some COz(aqueous) molecules managing to pass through the membrane and reform carbonate ions because of the basicity of the medium and/or due to the conditioning of the precipitate for analysis.

The calcium hydroxide particle reactivity is characterized, in the context of this invention, by the measurement method described in standard NBN T03.358, where $t_{90}$ is defined as the time to reach 90% of the maximum conductivity, when a sample of milk of lime made with the calcium hydroxide particles is injected into a sample of deionized water and the conductivity value is recorded over time until it remains stable, having thus reached a maximum value. This $t_{90}$ value obtained is considered to represent the reactivity of the milk of lime and/or calcium hydroxide particles .

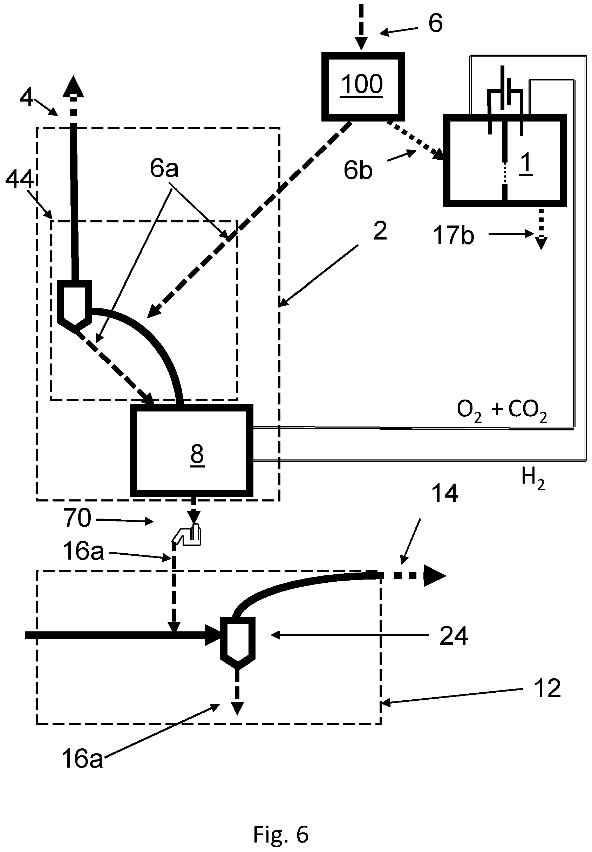

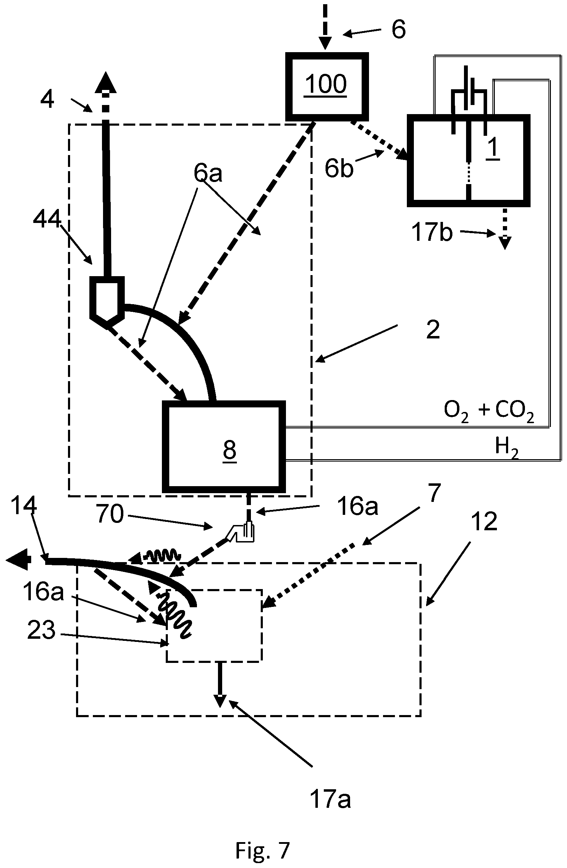

The embodiments according to Figures 6 and 7 allow for the effective transformation of limestone fines, especially those generated during the conditioning of raw materials for traditional kilns such as parallel flow regenerative kilns. The larger particles of these fines are transformed into either quicklime or slaked lime via a flash calciner, while the small limestone fines are treated in an electrolyzer according to the invention. These combined measures allow for an optimal transformation, covering the production of common lime products and high-value products with a high degree of purity.

In Figure 6, a stream of calcium carbonate particles in the form of fines 6 is fed to a classifier 100, specifically a screening machine, to separate the stream into at least two streams 6a, 6b based on particle size. After separation, a first stream of calcium carbonate particles 6a and a second stream of calcium carbonate particles 6b are formed. Advantageously, the particles in the first stream 6a can have a $d_{90}$ less than 10 mm, preferably less than 6 mm, and more preferably less than 4 mm, with a $d_{10}$ higher than or equal to 1 mm. The particles in the second stream 6b can have a $d_{90}$ of 1 mm or less.

Smaller carbonate materials 6b, such as limestone in the form of screened or ground particles, are fed to an electrolyzer 1 like the one described in Figure 1. The electrolyzer is capable of producing hydrated lime 17b with a high purity, suitable for specific applications, which require elevated levels of purity. In particular, because of the low level of Sulfur, Fe, Al, Mn and Si, the calcium hydroxide composition 17b is particularly adapted for the food industry to modify texture, to improve nutritional properties, to preserve or to facilitate the processing of food. Alternatively, the hydroxide composition 17b can be used as an additive or a calcium silicate precursor to a cement composition, or as a sorbent for $CO_2$ capture in air, in particular for Direct Air Capture application, or as a sorbent for purifying flue gas.

Larger carbonated materials 6a, such as limestone and/or dolomite in form of screened or ground particles, are fed into a first circuit 2, in which a first entraining gas 4 circulates. The first entraining gas 4 is produced in a decarbonation reactor 8, preferably a flash calciner. Particles of the carbonated materials 6a are entrained/conveyed to the reactor 8 where the decarbonation takes place under high temperatures. Advantageously, the first gas 4 is essentially made of $CO_2$ and is substantially free of nitrogen. For instance, the nitrogen represents less than 10% vol., in particular less than 5% vol. of the first gas composition. A $CO_2$ enriched gas composition facilitates its final purification into a suitable purity for

downstream $CO_2$ use or sequestration. Furthermore, when the decarbonation is performed in an atmosphere substantially free of nitrogen, a negligible amount of NOx is generated. Indeed, NOx is likely to be formed under heat and in the presence of oxygen and nitrogen, which are the two main constituents of air. The first circuit 2 is therefore sealed from the ambient air. The first gas 4 is used to preheat the particles of carbonated materials 6a. The first gas 4 mainly results from the $CO_2$ being released during the decarbonation process in the reactor 8 and optionally from the gas resulting from the combustion coupled to the decarbonation process. It should be noted that the first gas 4 transports the particles of carbonated materials 6a away from the reactor 8, which is the gas-generating source for the first gas 4 stream. In order to feed the reactor 8 with the particles of carbonated materials 6a, a solid/gas separation, preferably an inertial separation is performed in a separator 44 such as a cyclone. The separator 44 helps not only to separate the solid materials from the entraining gas, but also enhances heat exchanges. Indeed, the solid particles are efficiently heated by the entraining gas before being separated thanks to a proper distribution of the solid particles in the gas stream, a vast surface area of the solid gets in contact with the gas. Consequently, the solid and gas materials reach similar temperature in a very short time (typically a fraction of seconds). This type of heat exchanger is called solid-gas heat exchanger or suspension heat exchanger 44, and can typically contain several gas-solid separators to approach a counter current contact between the first gas 4 and the carbonated particles 6a. Once the carbonated particles 6a are decarbonated in the reactor 8, the decarbonated particles 16a are transferred to a second circuit 12, via a selective separation means 70 connecting the first and second circuits, 2 and 12. The selective separation means 70 (sealing device) is arranged so as to allow the transfer of the particles of decarbonated materials 16a from the first circuit 2 to the second circuit 12 while substantially preventing the passage of gases 4 to circuit 12 and gases 14 to circuit 2. This selective separation means 70 can be a siphon element, a loop seal, single or multiple flaps, table feeder, cellular wheel sluice, fluid seal-pot, "Dollar" plate, or any of the following valves: rotary valves, cone valve, J valve, L valve, trickle valve and flapper valve. A second gas 14 substantially free of $CO_2$ circulates in the second circuit 12, in order to avoid that the particles of decarbonated materials 16 react with the $CO_2$ present in the first circuit. The $CO_2$ in the second gas 14 represents less than 5% vol.. The second gas 14 is not only used to transport the particles of decarbonated materials 16a but also to cool them in a dedicated solid-gas heat exchanger or suspension heat exchanger 24 containing gas-solid separators such as a cyclone or series of cyclones.

Moreover, even though the quantity of $CO_2$ in the fumes from a lime/dolomite reactor 8 is significant, the process of the present invention ensure that any gas mixture (second gas 14) used to cool the decarbonated material(e.g. quicklime) 16 through direct contact with the CaO is substantially free of $CO_2$. This gas mixture (second gas 14) would therefore avoid any reconversion back to $CaCO_3$. Hence, the present invention allows to bring the residual amount of carbonate in the limestone/dolomite to an acceptable level (e.g. less than 5% in weight).

Figure 6 illustrates the possibility to collect at least one of the gas streams generated at the anode and cathode of the electrolyzer 1. The gas stream generated in the anode compartment comprises $O_2$ and $CO_2$. The gas stream generated in the cathode compartment comprises $H_2$. These gas streams are fed to the reactor 8 as a comburent and fuel source. The presence of $CO_2$ allows to maintain a high concentration of $CO_2$ in the reactor 8 when the oxygen rich stream is injected therein. In Figure 6, both gas streams generated at the anode and cathode of the electrolyzer 1 are recycled in the reactor 8. Alternatively, only one of the streams is recycled. In another alternative, the gas streams generated at the anode and cathode of the electrolyzer 1 are used for other purposes such as synthetic fuel generation.

In Figure 7, the second circuit 12 comprises a hydration section 23 instead of a cooling section as in Figure 6. In this section, the decarbonated particles 16a come into contact with at least liquid water and/or water steam 7, and optionally in the presence of a dilution gas (not shown), such as air or a dioxygen-enriched composition, particularly pure dioxygen. This process hydrates the particles to obtain hydrated particles 17 comprising $Ca(OH)_2$. The second gas 14 circulating in the second section 12 is at least heated by a portion of the heat generated by the hydration of the decarbonated particles 16a. This heat can be recovered for subsequent use. The heat from the second gas 14 can optionally be transferred to another fluid using an indirect heat exchange element, thereby producing a dust-free heat stream for subsequent use (not shown).

As shown in Figure 7, the conveyed decarbonated particles (16a) release a portion of their thermal energy, thereby heating the second gas 14. This process cools down the decarbonated particles 16a exiting the first circuit 2 at a temperature typically above 900°C. By cooling the particles, the temperature in the hydration section 23 is controlled below a certain threshold, under which thermodynamic equilibrium allows hydration to take place (e.g., below 520°C when the partial pressure of steam remains below 1 bar).

The process of the present invention ensures that any gas mixture being in direct contact with the $Ca(OH)_2$ particles 17a is substantially free of $CO_2$ in order to avoid any reconversion back to $CaCO_3$. The second gas 14 is therefore substantially free of $CO_2$ (e.g. less than 5% vol.). Hence, the present invention allows to bring the residual amount of carbonates in the product to an acceptable level (e.g. less than 5% in weight).

The content of the elements Al, Fe, Mg, Mn Si, are determined through inductively coupled plasma-optical emission spectroscopy (ICP-OES). The measurements of elements (Al, Fe, Mg, Mn, Si) are recalculated but are first determined in equivalent % oxide, i.e., $Al_2O_3$ (for Al), $Fe_2O_3$, $Mn_3O4$, MgO, $SiO_2$, $Al_2O_3$ (given in % g/100g).

The specific surface BET and porous volume are determined with $N_2$ adsorption-desorption isotherm measure-

ment, performed e.g. in a TriStar II 3020 from Micromeritics, where $N_2$ is slowly injected during the measurement and measures, by pressure, the amount that is adsorbed. The surface area is estimated by applying the BET (Brunauer, Emmett et Teller) theory on the isotherm. It covers micropores and mesopores (pore diameter range between 0 and 50 nm). The porous volume, or Vp single point, is the amount of adsorbed $N_2$ when P/P0 is equal to 0.98 (pore diameter range from 2 to 100 nm).

The content of C and S are measured through infrared quantification of carbon dioxide and sulfur trioxide upon using an Eltra CS580 infrared gas analyzer after calcination at high temperature at 1450 °C. The measurements of elements (C, S) are recalculated but are first determined in equivalent % oxide, i.e., $CO_2$, $SO_3$ (given in % g/100g).

By monomodal is meant that the particulate size distribution (PSD) measurements show one peak, as measured with a Sympatec Helos/BR lazer diffraction particle size analyser.

The particle size distribution (PSD) of the particles is measured with a laser diffraction particle size analyzer (e.g. Sympatec Helos/BR multiranges on a suspension of said calcium hydroxide composition in methanol). The result is a volume or weight cumulative curve between 0.289 to 2000 $\mu$m. From this curve is defined the $d_{10}$, $d_{50}$, $d_{90}$, $d_{99}$ and $d_{100}$ :

- $d_{10}$ is the size of the particle for which 10% in weight of the particles have a size equal to or lower than the $d_{10}$;
- $d_{50}$ is the size of the particle for which 50% in weight of the particles have a size equal to or lower than the $d_{50}$;
- $d_{90}$ is the size of the particle for which 90% in weight of the particles have a size equal to or lower than the $d_{90}$;
- $d_{99}$ is the size of the particle for which 99% in weight of the particles have a size equal to or lower than the $d_{99}$;
- $d_{100}$ is the minimal size of the particle for which 100% in weight of the particles have a size equal to or lower than the $d_{100}$.

Measurement is performed in volume but could be used in weight with hypothesis of the same particle density:

$$vol\ \% \ = vol/\ total\ vol * 100$$

$$= (weight\ /\ particle\ density)\ /\ (total\ weight\ /\ particle\ density) * 100$$

$$= weight/total\ weight * 100$$

$$= weight\ \%$$

Although the present invention has been described and illustrated in details, it is understood that the same is by way of illustration and example only and is not to be taken by way of limitation, the scope of the present invention being limited only by the terms of the appended claims and/or clauses:

1. Calcium hydroxide particles having:

- optionally a $d_{50}$ comprised in the range from 10 to 40 microns, preferably in the range from 15 to 25 microns
- optionally a $d_{99}$ lower than 120 microns, preferably lower than 75 microns ; and
- optionally a specific surface BET lower than 0.75 $m^2/g$, preferably lower than 0.6 m 2/g.

2. The particles according to Clause 1, having an Al content lower than 150 ppm relative to the weight of the particles, preferably lower than 100 ppm relative to the weight of the particles but higher than or equal to 50 ppm relative to the weight of the particles, in particular higher than 80 ppm relative to the weight of the particles.

3. The particles according to Clause 1, having an Al content lower than 50 ppm relative to the weight of the particles.

4. The particles according to any of Clauses 1 to 3, having a Fe content lower than 2000 pm relative to the weight of the particles, preferably lower than 1000 ppm relative to the weight of the particles, more preferably lower than 200 relative to the weight of the particles, in particular lower than 150 ppm relative to the weight of the particles but higher than or equal to 50 ppm relative to the weight of the particles, in particular higher than 80 ppm relative to the weight of the particles.

5. The particles according to any of Clauses 1 to 3, having a Fe content lower than 50 ppm relative to the weight of the particles.

6. The particles according to any of Clauses 1 to 5, having a Mn content lower than 1500 pm relative to the weight of the particles, preferably lower than 1000 ppm relative to the weight of the particles, more preferably lower than 200 relative to the weight of the particles, in particular lower than 150 ppm relative to the weight of the particles but higher than or equal to 50 ppm relative to the weight of the particles, in particular higher than 80 ppm relative to the weight of the particles.

7. The particles according to any of Clauses 1 to 5, having a Mn content lower than 50 ppm relative to the weight of the particles.

8. The particles according to any of Clauses 1 to 7, having a Si content lower than 200 ppm relative to the weight of the particles, preferably lower than 150 ppm relative to the weight of the particles but higher than or equal to 100 ppm relative to the weight of the particles, in particular higher than 105 ppm relative to the weight of the particles.

9. The particles according to any of the Clauses 1 to 7, having a Si content lower than 100 ppm relative to the weight of the particles.

10. The particles according to any of the preceding clauses, having a S content not higher than 2000 ppm relative to the weight of the particles.

11. The particles according to any of the preceding clauses, having a C content not higher than 0.7 % relative to the weight of the particles.

12. The particles according to any of the preceding clauses, having a BJH pore volume for the range of pores having a diameter of between 20-1000 Å not higher than 0.002 $cm^3/g$ as calculated according to the method described in standard DIN 66134 (February 1998 version).

13. The particles according to any of the preceding clauses, wherein the particulate size distribution of the particles has a monomodal shape.

14. The particles according to any of the preceding clauses, having a $d_{10}$ higher than 1 micron.

15. The particles according to any of the preceding clauses, having a reactivity with a $t_{90}$ higher than 20 seconds, preferably higher than 30 seconds, as calculated according to the method described in standard NBN T03.358.

16. The particles according to any of the preceding clauses, having a weight fraction of Ca(OH)2 of at least 80%, preferably at least 90% on a dry basis.

17. Milk of lime comprising the particles according to any of the preceding clauses.

18. Shaped bodies, selected from the group comprising pellets, granules, extrudates, 3D printings or compacts such as tablets or briquettes comprising the particles according to any of Clauses 1 to 16.

19. Use of at least one of the particles according to any of Clauses 1 to 16, the milk of lime according to Clause 17 and the shaped bodies according to Clause 18 either

- as an additive to modify texture, improve nutritional properties, preserve and/or facilitate the processing of food,
- as an additive or a calcium silicate precursor to a cement composition,
- as a sorbent for $CO_2$ capture in air, in particular for Direct Air Capture application, or
- as a sorbent for purifying flue gas.

20. Process for forming at least two calcium-based compositions, in particular one of the at least two calcium-based compositions being the calcium hydroxide particles according to any of Clauses 1 to 16, said process comprising the steps of:

- separating calcium carbonate particles (6) according to size, thereby forming a first group of calcium carbonate particles (6a) and a second group of calcium carbonate particles (6b), the calcium carbonate particles (6a) of the first group are on average larger than calcium carbonate particles of the second group (6b);

- heating the calcium carbonate particles of the first group (6a) in a reactor (8) of a first circuit (2) up to a temperature range in which carbon dioxide of said calcium carbonate particles (6a) is released to obtain decarbonated particles (16a) comprising CaO;

- conveying the calcium carbonate particles of the first group (6a) by a first entraining gas (4) in the first circuit (2) for preheating said carbonated particles (6a), said entraining gas (4) comprising said carbon dioxide, preferably said gas composition being substantially free of nitrogen;

- separating, preferably inertially separating, the carbonated particles of the first group (16a) from a first entraining gas flow, preferably before being fed to the reactor (8);

- preferably transferring the decarbonated particles (16a) to a cooling section (22) of a second circuit comprising a second entraining gas (14) in which the conveyed decarbonated particles (16a) release a portion of their thermal energy, preferably said second entraining gas (14) is substantially free of carbon dioxide;

- preferably inertially separating the decarbonated particles (16a) from a second entraining gas flow, thereby forming another of the at least two calcium-based compositions;

- contacting the calcium carbonate particles of the second group (16b) with water of a first aqueous solution contained in a first receptacle in which an anode is provided;

- circulating current between the anode and a cathode provided in a second receptacle containing a second aqueous solution, said first and second receptacles being separated by at least one separating membrane, thereby forming the one of the at least two calcium-based compositions, as a precipitate, in the second receptacle;

- optionally collecting a first gas stream generated in the first receptacle;

- optionally collecting a second gas stream generated in the second receptacle.

21. Process according to the preceding clause, further comprising supplying the first gas stream as a comburent of a combustion generating at least a portion of the heat used to heat the particles of carbonated materials of the first group (6a) in the reactor (8)

22. Process according to any of Clauses 20 and 21, and/or supplying the second gas stream as a fuel of a combustion generating at least a portion of the heat used to heat the particles of carbonated materials of the first group (6a) in the reactor (8).

23. Process according to any of Clauses 20 to 22, further comprising hydrating the decarbonated particles (16a) of the first group in contact with water (7) as liquid and/or steam, and optionally in the presence of a dilution gas, such as air or a dioxygen-enriched composition, in particular pure dioxygen, in the hydration section (23), preferably arranged in the second circuit (2); to obtain hydrated particles (17a) comprising $Ca(OH)_2$, thereby forming a further of the at least two calcium-based compositions, optionally transferring at least a portion of the heat generated by the hydration of the decarbonated particles (16a) of the first group to the second gas (14).

24. Process according to any of Clauses 20 to 23, wherein the at least one separating membrane (M) comprises a membrane with one side in contact with the first aqueous solution and a second side in contact with the second aqueous solution.

25. Process according to any of Clauses 20 to 24, wherein the at least one membrane or the membrane comprises a cationic membrane, allowing the transfer of cations while blocking or minimizing the transfer of solid particles and anions.

26. Process according to any of Clauses 20 to 25, wherein at least one of the first and the second solution comprises a Ca-cation-based electrolyte, in particular $Ca(ClO_4)_2$.

27. Process according to any of Clauses 20 to 26, wherein the particles of the first group (6a) have a $d_{90}$ less than 10 mm, preferably less than 6 mm, more preferably less than 4 mm but a $d_{10}$ higher than or equal to 1 mm and the particles of the second group (6b) have a $d_{90}$ lower than or equal to 1 mm.

**Claims**

1. Calcium hydroxide particles having:

    - a $d_{50}$ comprised in the range from 10 to 40 microns, preferably in the range from 15 to 25 microns;
    - a specific surface BET lower than 0.75 $m^2/g$, preferably lower than 0.6 $m^2/g$; and
    - optionally a $d_{99}$ lower than 120 microns, preferably lower than 75 microns.

2. The particles according to Claim 1, having an Al content lower than 150 ppm relative to the weight of the particles, preferably lower than 100 ppm relative to the weight of the particles but higher than or equal to 50 ppm relative to the weight of the particles, in particular higher than 80 ppm relative to the weight of the particles.

3. The particles according to Claim 1, having an Al content lower than 50 ppm relative to the weight of the particles.

4. The particles according to any of Claims 1 to 3, having a Fe content lower than 2000 pm relative to the weight of the particles, preferably lower than 1000 ppm relative to the weight of the particles, more preferably lower than 200 relative to the weight of the particles, in particular lower than 150 ppm relative to the weight of the particles but higher than or equal to 50 ppm relative to the weight of the particles, in particular higher than 80 ppm relative to the weight of the particles.

5. The particles according to any of Claims 1 to 3, having a Fe content lower than 50 ppm relative to the weight of the particles.

6. The particles according to any of the preceding claims, having a Mn content lower than 1500 pm relative to the weight of the particles, preferably lower than 1000 ppm relative to the weight of the particles, more preferably lower than 200 relative to the weight of the particles, in particular lower than 150 ppm relative to the weight of the particles but higher than or equal to 50 ppm relative to the weight of the particles, in particular higher than 80 ppm relative to the weight of the particles or a Mn content lower than 50 ppm relative to the weight of the particles.

7. The particles according to any of the preceding claims, having a Si content lower than 200 ppm relative to the weight of the particles, preferably lower than 150 ppm relative to the weight of the particles but higher than or equal to 100 ppm relative to the weight of the particles, in particular higher than 105 ppm relative to the weight of the particles or a Si content lower than 100 ppm relative to the weight of the particles.

8. The particles according to any of the preceding claims, having a BJH pore volume for the range of pores having a diameter of between 20-1000 Å not higher than 0.002 $cm^3/g$ as calculated according to the method described in standard DIN 66134 (February 1998 version).

9. The particles according to any of the preceding claims, wherein the particulate size distribution of the particles has a monomodal shape.

10. The particles according to any of the preceding claims, having a $d_{10}$ higher than 1 micron.

11. The particles according to any of the preceding claims, having a reactivity with a $t_{90}$ higher than 20 seconds, preferably higher than 30 seconds, as calculated according to the method described in standard NBN T03.358.

12. Milk of lime comprising the particles according to any of the preceding claims.

13. Shaped bodies, selected from the group comprising pellets, granules, extrudates, 3D printings or compacts such as tablets or briquettes comprising the particles according to any of Claims 1 to 11.

14. Use of at least one of the particles according to any of Claims 1 to 11, the milk of lime according to Claim 12 and the shaped bodies according to Claim 13 either

    - as an additive to modify texture, to improve nutritional properties, to preserve and/or to facilitate the processing of food,
    - as an additive or a calcium silicate precursor to a cement composition,
    - as a sorbent for $CO_2$ capture in air, in particular for Direct Air Capture application or

- as a sorbent for purifying flue gas.

15. Process for forming at least two calcium-based compositions, in particular one of the at least two calcium-based compositions being the particles according to any of Claims 1 to 11, said process comprising the steps of:

- separating calcium carbonate particles (6) according to size, thereby forming a first group of calcium carbonate particles (6a) and a second group of calcium carbonate particles (6b), the calcium carbonate particles (6a) of the first group are on average larger than calcium carbonate particles of the second group (6b).
- heating the calcium carbonate particles the first group (6a) in a reactor (8) of a first circuit (2) up to a temperature range in which carbon dioxide of said calcium carbonate particles (6a) is released to obtain decarbonated particles (16a) comprising CaO;
- conveying the calcium carbonate particles of the first group (6a) by a first entraining gas (4) in the first circuit (2) for preheating said carbonated particles (6a), said entraining gas (4) comprising said carbon dioxide, preferably said gas composition being substantially free of nitrogen;
- separating, preferably inertially separating, the carbonated particles of the first group (16a) from a first entraining gas flow, preferably before being fed to the reactor (8);
- transferring the decarbonated particles (16a) to a cooling section (22) of a second circuit comprising a second entraining gas (14) in which the conveyed decarbonated particles (16a) release a portion of their thermal energy, preferably said second entraining gas (14) is substantially free of carbon dioxide;
- inertially separating the decarbonated particles (16a) from a second entraining gas flow, the decarbonated particles (16a), thereby forming another of the at least two calcium-based compositions;
- contacting the calcium carbonate particles of the second group (16b) with water of a first aqueous solution contained in a first receptacle in which an anode is provided;
- circulating current between the anode and a cathode provided in a second receptacle containing a second aqueous solution, said first and second receptacles being separated by at least one separating membrane, thereby forming the one of the at least two calcium-based compositions, as a precipitate, in the second receptacle;
- optionally collecting a first gas stream generated in the second receptacle;
- optionally collecting a second gas stream generated in the first receptacle.

Fig. 1

Fig. 2

Fig. 3

## Sample N°7

Fig. 4

Fig. 5a

Fig. 5b

Fig. 6

Fig. 7

Europäisches
Patentamt
European
Patent Office
Office européen
des brevets

# EUROPEAN SEARCH REPORT

Application Number

EP 24 17 8076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2022/064063 A1 (CHIANG YET-MING [US] ET AL) 3 March 2022 (2022-03-03) * the whole document * ----- | 1-14 | INV. C01F11/02 C01F11/06 C25B1/20 |
| X | LEAH D. ELLIS ET AL: "Toward electrochemical synthesis of cement-An electrolyzer-based process for decarbonating CaCO 3 while producing useful gas streams", PROCEEDINGS OF THE NATIONAL ACADEMY OF SCIENCES (PNAS), 16 September 2019 (2019-09-16), XP055694667, ISSN: 0027-8424, DOI: 10.1073/pnas.1821673116 * figure 4 * * page 4, paragraph 1 * ----- | 1-14 | |
| A | US 10 960 379 B2 (MISSISSIPPI LIME COMPANY [US]) 30 March 2021 (2021-03-30) * the whole document * ----- | 1-15 | **TECHNICAL FIELDS SEARCHED (IPC)** C01F C25B |

The present search report has been drawn up for all claims

| Place of search | Date of completion of the search | Examiner |
|---|---|---|
| Munich | 18 November 2024 | Stratford, Katja |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

**EP 4 653 393 A1**

## ANNEX TO THE EUROPEAN SEARCH REPORT
## ON EUROPEAN PATENT APPLICATION NO.

EP 24 17 8076

18-11-2024

| Patent document cited in search report | Publication date | Patent family member(s) | Publication date |
|---|---|---|---|
| US 2022064063 A1 | 03-03-2022 | BR 112021013144 A2 | 08-09-2021 |
| | | CA 3124704 A1 | 23-07-2020 |
| | | CN 113302168 A | 24-08-2021 |
| | | EP 3911614 A1 | 24-11-2021 |
| | | JP 2022517257 A | 07-03-2022 |
| | | US 2022064063 A1 | 03-03-2022 |
| | | US 2024132400 A1 | 25-04-2024 |
| | | US 2024150235 A1 | 09-05-2024 |
| | | WO 2020150449 A1 | 23-07-2020 |
| US 10960379 B2 | 30-03-2021 | US 10549256 B1 | 04-02-2020 |
| | | US 2020147583 A1 | 14-05-2020 |
| | | US 2021205778 A1 | 08-07-2021 |

EPO FORM P0459

For more details about this annex : see Official Journal of the European Patent Office, No. 12/82

**REFERENCES CITED IN THE DESCRIPTION**

**Patent documents cited in the description**

- US 2022064063 A